# EUROPEAN PATENT SPECIFICATION

(11) **EP 4 213 558 B1**
(45) Date of publication and mention of the grant of the patent: **25.06.2025**
(21) Application number: 20958354.1
(22) Date of filing: 23.10.2020
(51) Int. Cl.: H04W 76/27, H04W 72/0453, H04W 72/23

(54) **DATA TRANSMISSION METHOD AND RELATED APPARATUS**
DATENÜBERTRAGUNGSVERFAHREN UND ZUGEHÖRIGE VORRICHTUNG
PROCÉDÉ DE TRANSMISSION DE DONNÉES ET APPAREIL ASSOCIÉ

(43) Date of publication of application: 19.07.2023
(73) Proprietor: Huawei Technologies Co., Ltd., Shenzhen, Guangdong 518129 (CN)
(72) Inventor: LIU, Mengting, Shenzhen, Guangdong 518129 (CN); HUANG, Su, Shenzhen, Guangdong 518129 (CN); XIE, Xi, Shenzhen, Guangdong 518129 (CN); GUO, Yinghao, Shenzhen, Guangdong 518129 (CN)
(74) Representative: Gill Jennings & Every LLP
(86) International application number: PCT/CN2020/123407
(87) International publication number: WO 2022/082772

(56) References cited:
- EP-B1- 3 571 803
- WO-A1-2020/032659
- WO-A1-2020/076032
- CN-A- 110 831 197
- CN-A- 111 279 643
- US-B2- 10 587 363
- US-B2- 10 681 648

## Description

### TECHNICAL FIELD

This application relates to communication technologies, and in particular, to a data transmission method and a related apparatus.

### BACKGROUND

Currently, for scenarios such as narrowband internet of things (narrowband internet of things, NB-IoT), enhanced coverage (enhanced coverage), and bandwidth reduced low complexity (bandwidth reduced low complexity), a terminal device in an idle state may implement data transmission with a network device by using an early data transmission (early data transmission, EDT) technology or a pre-configured uplink resource (pre-configured uplink resource, PUR) technology.

However, when data transmission with the network device is implemented by using the EDT technology or the PUR technology, only one-shot data transmission can be implemented, and continuous or periodic data transmission cannot be implemented.

WO 2020/076032 A1 discloses a method for responding to a paging. The method includes receiving a configuration of a pre-allocated resource, receiving, in a paging occasion, information on type of resource for a response message, transmitting the response message on the pre-allocated resource, based on that the information informs the pre-allocated resource.

EP 3 571 803 A2 discloses a wireless device that transmits one or more capability messages to a base station indicating that the wireless device supports a first number of channel state information processes per bandwidth part of a cell. One or more second messages are received that comprise: first configuration parameters of a first plurality of bandwidth parts of a first cell where the first plurality of bandwidth parts comprising a first bandwidth part; second configuration parameters indicating a plurality of channel state information reference signal resources; and third configuration parameters of a second number of channel state information processes for the first bandwidth part where the second number is smaller than or equal to the first number. First reference signals received via the plurality of channel state information reference signal resources are measured. Channel state information for the second number of channel state information processes are transmitted based on the measuring.

### SUMMARY

This application provides two data transmission methods at interrelated entities/apparatuses (UE in idle/inactive state and network device) and the computer-readable medium storing computer program instructions to be run on both apparatuses/devices so that a terminal device in an idle state or an inactive state implements continuous and/or aperiodic data transmission.

The invention is defined by the appended independent claims 1, 6, 11, 13 and 15. Further advantageous embodiments are defined in the dependent claims.

The following briefly describes accompanying drawings used in descriptions of embodiments or a conventional technology.

Specifically:
FIG. 1 shows a basic architecture of a communication system according to an embodiment of this application;
FIG. 2 is a schematic diagram of a hardware structure applicable to a communication apparatus according to an embodiment of this application;
FIG. 3 is a schematic flowchart of a data transmission method according to an embodiment of this application;
FIG. 4 is a schematic flowchart of another data transmission method according to an embodiment of this application;
FIG. 5 is a schematic flowchart of still another data transmission method according to an embodiment of this application;
FIG. 6 is a schematic diagram of a structure of a communication apparatus according to an embodiment of this application;
FIG. 7 is a schematic diagram of a structure of a simplified terminal device according to an embodiment of this application; and
FIG. 8 is a schematic diagram of a structure of a simplified access network device according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one of a, b, or c may represent a, b, c, a combination of a and b, a combination of a and c, a combination of b and c, or a combination of a, b, and c, where a, b, and c may be in a singular or plural form. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following explains and describes nouns (or communication terms) in this application.

### 1. Idle state (idle)

When a terminal device is in an idle state, the terminal device does not reserve radio resource control (radio resource control, RRC) and context (context). RRC context is a parameter for establishing communication between the terminal device and a network device. The RRC context may include security context, capability information of the terminal device, and the like. In addition, the terminal device does not establish a connection to a core network device either. In other words, the core network device is in CN-IDLE (core network idle state). The terminal device does not have data to be transmitted, enters a sleep (Sleep) state, and disables a transceiver unit to reduce power consumption. The terminal device in the idle state wakes up only periodically to receive a paging message.

### 2. Connected state (connected)

When the terminal device is in a connected state, the terminal device has established the RRC context. A parameter required for establishing communication between the terminal device and the network device has been obtained by both communication parties. The network device allocates a cell radio network temporary identifier (cell radio network temporary identifier, C-RNTI) to an accessed terminal device. In addition, the terminal device also establishes a connection to the core network device. In other words, the core network device is in CN_CONNECTED (core network connected state). In this case, if the terminal device is transmitting data, the terminal device is in a continuous reception state. When data transmission is completed and the terminal device enters a waiting state, the terminal device switches to discontinuous reception (discontinuous reception, DRX) in a connected state to reduce power consumption. If there is still data to be transmitted subsequently, the terminal device returns to the continuous reception state again. At this point, because the RRC context has been established, switching time required for UE to leave DRX in the connected state and prepare for continuous reception is much shorter than time required for switching from the idle state to the connected state.

### 3. Inactive state (inactive)

When the terminal device is in an inactive state, the RRC context is retained between the terminal device and the network device. In addition, the terminal device also establishes the connection to the core network device. In other words, the core network device is in CN_CONNECTED (core network connected state). In this case, a procedure of switching to the connected state to receive data is relatively fast, and no additional core network signaling overhead is generated. In addition, the terminal device in an RRC inactive state also enters the sleep state. Therefore, the inactive state can meet a requirement of reducing a connection delay and reducing signaling overheads and power consumption.

### 4. Bandwidth part (bandwidth part, BWP)

A BWP is defined as a combination of a plurality of consecutive resource blocks (resource block, RB) in one carrier.

BWPs are classified into an initial (initial) BWP and a dedicated (dedicated) BWP. The initial BWP is mainly used by the terminal device to receive remaining minimum system information (remaining minimum system information, RMSI), initiate random access based on on-demand system information (on-demand system information, OSI), and the like. When the terminal device enters the connected state from the idle state, a BWP of a cell on which the terminal device camps is referred to as an "initial BWP", because the terminal device initiates an initial access process on the BWP. The dedicated BWP is mainly used for data service transmission, and a bandwidth of the dedicated BWP is generally greater than that of the initial BWP.

In a new radio (new radio, NR) frequency division duplex (frequency division duplex, FDD) system, a maximum of four downlink (downlink, DL) BWPs and four uplink (uplink, UL) BWPs can be configured for one terminal device. At any specific moment, only one uplink BWP and one downlink BWP can be activated. Neither an uplink data channel nor a downlink data channel, a control channel, or a reference signal can be transmitted beyond a range of the BWP. Specifically, in a downlink direction, on each unit carrier, a maximum of four BWPs may be configured for one terminal device, but only one BWP is in an active state at a moment. The BWP in the active state indicates an operating bandwidth used by the terminal device within an operating bandwidth of a cell. Outside the BWP, the terminal device does not receive a physical downlink shared channel (Physical Downlink Shared Channel, PDSCH), a physical downlink control channel (physical downlink control channel, PDCCH), or a channel state information reference signal (channel state information reference signal, CSI-RS) (unless used for mobility radio resource management (radio resource management, RRM)). In an uplink direction, on each unit carrier, a maximum of four BWPs may be configured for one terminal device, but only one BWP is in the active state at a moment. If a supplementary uplink (supplementary uplink, SUL) is configured for the terminal device, the terminal device may additionally configure a maximum of four BWPs on the SUL and activate only one BWP at a time. The terminal device cannot transmit a PUSCH or a PUCCH outside the BWP. For an activated cell, the terminal device no longer transmits a sounding reference signal (sounding reference signal, SRS) outside the BWP. In an NR time division duplex (time division duplex, TDD) system, a maximum of four BWP pairs are configured for one terminal device. A BWP pair means that a DL BWP identifier (ID) and a UL BWP ID are the same, and have a same center frequency, but bandwidths and subcarrier spacings may be different.

There are three types of BWP configuration: an initial BWP, an active (active) BWP, and a default (default) BWP.

The initial BWP includes an initial DL BWP and an initial UL BWP. The initial DL BWP and the initial UL BWP are configured in a system information block (system information block, SIB) 1. If the initial BWP is not configured, the initial BWP is CORESET0 by default. The initial BWP is mainly used in an initial access process, for example, receiving of an SIB 1, receiving of a random access response (random access response, RAR), receiving of a Msg4, and sending of a preamble (preamble) and a Msg3 in a random access process.

The active (active) BWP is a BWP configured for the terminal device after initial access is completed. After initial access is completed, the terminal device has various service requirements. Therefore, generally, a bandwidth of the active BWP is greater than that of the initial BWP.

The default (default) BWP is used when the terminal device has no service requirement for a long time, so that the terminal device switches from the active BWP with a large bandwidth to the default BWP with a relatively small bandwidth, to reduce power consumption.

The configuration information of the BWP includes an SCS, a cyclic prefix (cyclic prefix, CP), a frequency domain location, a size (an indication manner is a resource indicator value (resource indicator value, RIV)), an ID, a PDCCH in the BWP, and a common parameter and a dedicated parameter (generic parameters and dedicate parameters) of a PDSCH in the BWP.

SCSs and CPs of the PDCCH, the PDSCH, and the like in the BWP are the same as those in the BWP. The bandwidth of the BWP may be any value within 275 RBs. An RIV is indicated based on a location and a bandwidth (location and bandwidth), and then a start location and a quantity of RBs of the BWP are calculated by using a formula. A reference point of the start location is Point A.

BWP switching includes the following four switching scenarios: fast switching indicated by downlink control information (downlink control information, DCI) for data scheduling; switching from the initial BWP to a first active BWP during RRC (re) configuration and activation of a secondary cell (secondary cell, SCell); switching based on timer (timer) when no service is scheduled for a long time; and automatically switching to the initial BWP if no physical random access channel (physical random access channel, PRACH) resource exists in the active BWP in the random access process.

The four switching scenarios involve three switching states. A first switching state is DCI_based switching. DCI switching is used to quickly implement BWP switching when there is data scheduling. In the DCI, a BWP indicator is used to indicate BWP switching. DCI format 0_1 and DCI format 1_1 may be used for DCI switching, but are not used only for DCI switching. If the active BWP indicated in the DCI received by the terminal device is different from a current active BWP, DCI switching is triggered. However, it should be noted that when the terminal device performs DCI BWP switching, data scheduled by the DCI needs to be transmitted on a new BWP. Therefore, an information field size in the current DCI may not be the same as a size required for interpreting the information field by the new BWP. Therefore, 0 may need to be filled or several bits (bit) may need to be removed during interpretation. A second switching state is RRC_based switching. RRC BWP switching is used to enable the terminal device to enter a proper BWP to perform service receiving and sending after the terminal device completes initial access and enters a connected state, or after RRC reconfiguration or SCell activation, instead of always staying on the initial BWP. In an initial access process, the terminal device always uses the initial BWP. In other words, some operations related to an SIB and random access (random access, RA) are usually completed in the initial BWP. A third switching state is timer_based switching. Timer_based switching is used when the terminal device does not perform service receiving or sending for a long time (which means that the terminal device may have no service requirement in this case), so that the terminal device switches to the default BWP with a relatively small bandwidth, to save energy. According to a current protocol, timer_based switching is required only for the downlink BWP, and is not required for the uplink BWP. This is because the downlink BWP has a large bandwidth and consumes more power. A specific duration is indicated by a bandwidth part inactivity timer (bwp inactivity timer) (the bwp inactivity timer indicates a duration in which there is no service), and a specific default BWP is indicated by a default downlink bandwidth part identifier (default downlink BWP ID). Once initial access is completed and the network device enters the connected state, the network device may activate a BWP other than the initial BWP by using the first active downlink bandwidth part identifier (first active downlink BWP ID) and the first active uplink bandwidth part identifier (first active uplink BWP ID). Generally, an active bandwidth is greater than that of the initial BWP.

In addition, in the random access process, if there is no PRACH resource in an active UL BWP, the terminal device automatically switches to an initial UL BWP, and a corresponding DL BWP also needs to be switched to a pair corresponding to the UL BWP. If the terminal device is switched to the initial UL BWP, an active DL BWP is also switched to an initial DL BWP. If the terminal device is not switched to the initial BWP, an ID of the active DL BWP needs to be the same as an ID of the active UL BWP. If they are different, the active DL BWP needs to be switched.

If the terminal device receives, in the random access process, BWP switching indicated by the DCI, whether the terminal device switches the BWP depends on behavior of the terminal device, or switches to a new BWP to start random access again, or ignores a switching indication.

However, if the terminal device receives, in the random access process, BWP switching indicated by an RRC configuration or reconfiguration indication, the terminal device needs to stop a current random access process, and perform BWP switching.

### (5) Semi-persistent scheduling (semi-persistent scheduling, SPS)

SPS is also referred to as semi-persistent scheduling. When the network device specifies, in a transmission time interval (transmission time interval, TTI) by using a PDCCH scrambled by using an SPS C-RNTI, a radio resource (referred to as an SPS resource in this application) used by the terminal device, the terminal device may transmit data by using the SPS resource in each period.

SPS scheduling and release configuration can be viewed in the RRC reconfiguration message. Main configuration parameters are as follows: configured scheduling RNTI (configured scheduling-RNTI, CS-RNTI): used for activation, deactivation, and retransmission; periodicity (periodicity): SPS resource usage period; and quantity of HARQ processes (nrof HARQ-Processes): quantity of HARQ processes configured for SPS.

The foregoing content briefly describes meanings of nouns (communication terms) in embodiments of this application. To better understand the technical solutions provided in embodiments of this application, the following describes a system architecture and/or an application scenario in embodiments of this application. It may be understood that scenarios described in embodiments of this application are intended to describe the technical solutions in embodiments of this application more clearly, and do not constitute a limitation on the technical solutions provided in embodiments of this application.

For ease of understanding this application, related technical knowledge included in embodiments of this application is described herein.

Currently, in a narrowband internet of things (narrowband internet of things, NB-IoT) scenario, a terminal device in an idle state may implement data transmission with a network device by using an early data transmission (early data transmission, EDT) technology or a pre-configured uplink resource (pre-configured uplink resource, PUR) technology. Specifically, with reference to Table 1, it can be learned that when data transmission with the network device is implemented by using the EDT technology or the PUR technology, only single data transmission can be implemented, and continuous or periodic data transmission cannot be implemented.

**Table 1 data transmission between a terminal device in an idle state and a network device**

| | EDT | PUR |
|---|---|---|
| Definition and description | A terminal device in an idle state is allowed to perform uplink data transmission once in a random access process, and then perform corresponding downlink data transmission once (optional). | A terminal device in an idle state is allowed to perform uplink transmission once by using a pre-configured uplink resource, and does not need to initiate a random access process. |
| Protocol version | R15-R16 | R16 |
| State of a terminal device | Idle state | Idle state |
| Scenario | NB-IoT, enhanced coverage area (enhanced coverage), and low bandwidth and low complexity (bandwidth reduced low complexity) scenario | NB-IoT, enhanced coverage area (enhanced coverage), and low bandwidth and low complexity (bandwidth reduced low complexity) scenario |
| Data size | A data size is less than or equal to a transport block size (for example, 1 Kbits) indicated in system information. | A data size is small, and a specific value is not defined in a protocol. |
| Feature | One-shot transmission (one-shot transmission); | One-shot transmission (one-shot transmission); |
| | one uplink data transmission + one downlink (optional) data transmission; | |
| | | one uplink data transmission + one downlink (optional) data transmission; |
| | a resource does not need to be pre-configured; | |
| | and | a resource needs to be pre-configured before an RRC connection is released; and |
| | a random access procedure needs to be initiated. | |
| | | a random access procedure does not need to be initiated. |

Based on this, an embodiment of this application provides a data transmission method to resolve the foregoing problem. The following describes this embodiment of this application in detail.

It should be understood that the technical solutions in embodiments of this application may be applied to a long term evolution (long term evolution, LTE) architecture, a fifth-generation mobile communication technology (5th generation mobile networks, 5G), satellite communication, and the like. The technical solutions in embodiments of this application may be further applied to another future communication system, for example, a 6G communication system. In the future communication system, functions may remain the same, but names may change.

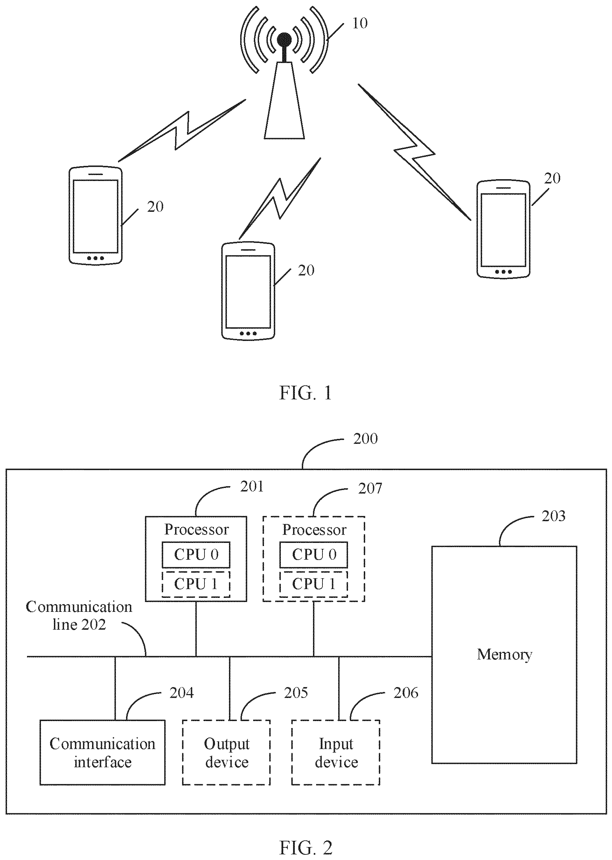

The following describes a basic architecture of a communication system provided in an embodiment of this application. FIG. 1 shows a basic architecture of a communication system according to an embodiment of this application. As shown in FIG. 1, the communication system may include one or more network devices 10 (only one is shown) and one or more terminal devices 20 that communicate with each network device 10. FIG. 1 is merely a schematic diagram, and does not constitute a limitation on an applicable scenario of technical solutions provided in this application.

The network device 10 may be an apparatus that is deployed in a radio access network (radio access network, RAN) and that provides a wireless communication function for the terminal device 20, for example, may be a transmission reception point (transmission reception point, TRP), a base station, or control nodes in various forms. The control node in various forms is, for example, a network controller, a radio controller, or a radio controller in a cloud radio access network (cloud radio access network, CRAN) scenario. Specifically, the network device may be a macro base station, a micro base station (also referred to as a small cell), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB, HNB), a baseband unit (baseband unit, BBU), a transmitting and receiving point (transmitting and receiving point, TRP), a transmitting point (transmitting, TP), a mobile switching center, or the like, or may be an antenna panel of the base station. The control node may be connected to a plurality of base stations, and configure resources for a plurality of terminals covered by the plurality of base stations. In systems using different radio access technologies, names of devices having functions of the base station may vary. For example, the network device 10 may be an evolved NodeB (evolved NodeB, eNB or eNodeB) in an LTE system, or may be a radio controller in a cloud radio access network (cloud radio access network, CRAN) scenario, or may be a (new radio nodeB, gNB) in 5G. Alternatively, the network device 10 may be a relay station, an access point, a vehicle-mounted device, a wearable device, a network side device in a network after 5G, or a network device in a future evolved PLMN network. A specific name of the network device is not limited in this application.

The terminal device 20 may be a device that includes a wireless transceiver function and that can cooperate with a network device to provide a communication service for a user. Specifically, the terminal device 20 may be user equipment (user equipment, UE), an access terminal, a subscriber unit, a subscriber station, a mobile station, a mobile console, a remote station, a remote terminal, a mobile device, a terminal, radio communication equipment, a user agent, or a user apparatus. Alternatively, the terminal device 20 may be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (which may also be referred to as a wearable intelligent device), a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). Alternatively, the terminal device 20 may be a device-to-device (device-to-device, D2D) device, for example, an electricity meter or a water meter. Alternatively, the terminal device 20 may be a terminal device in a 5G system, or may be a terminal device in a next-generation communication system. This is not limited in this embodiment of this application.

In addition, the technical solutions provided in embodiments of this application may be applicable to a plurality of system architectures. The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Optionally, each network element (for example, the network device 10 and the terminal device 20) in FIG. 1 may be implemented by one device, or may be jointly implemented by a plurality of devices, or may be a function module in one device. This is not specifically limited in this embodiment of this application. It may be understood that the foregoing functions may be network elements in a hardware device, or may be software functions running on dedicated hardware, or may be virtualization functions instantiated on a platform (for example, a cloud platform).

For example, each device in FIG. 1 may be implemented by using a communication apparatus 200 in FIG. 2. FIG. 2 is a schematic diagram of a hardware structure applicable to a communication apparatus according to an embodiment of this application. The communication apparatus 200 includes at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path on which information is transferred between the foregoing components.

The communication interface 204 is any apparatus (such as an antenna) such as a transceiver, and is configured to communicate with another device or a communication network, such as Ethernet, a RAN, or a wireless local area network (wireless local area network, WLAN).

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 202. The memory may alternatively be integrated with the processor. The memory provided in embodiments of this application may be usually non-volatile. The memory 203 is configured to store computer-executable instructions for executing the solutions in this application, and the processor 201 controls the execution. The processor 201 is configured to execute the computer-executable instructions stored in the memory 203, to implement the method provided in the following embodiments of this application.

Optionally, the computer-executable instructions in this embodiment of this application may also be referred to as application program code. This is not specifically limited in this embodiment of this application.

In a possible implementation, the processor 201 may include one or more CPUs, for example, a CPU 0 and a CPU 1 in FIG. 2.

In a possible implementation, the communication apparatus 200 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

The foregoing communication apparatus 200 may be a general-purpose device or a special-purpose device. During specific implementation, the communication apparatus 200 may be a desktop computer, a portable computer, a network server, a personal digital assistant (personal digital assistant, PDA), a mobile phone, a tablet computer, a wireless terminal device, an embedded device, or a device having a structure similar to that in FIG. 2. A type of the communication apparatus 200 is not limited in this embodiment of this application.

The following describes the technical solutions provided in embodiments of this application with reference to the accompanying drawings.

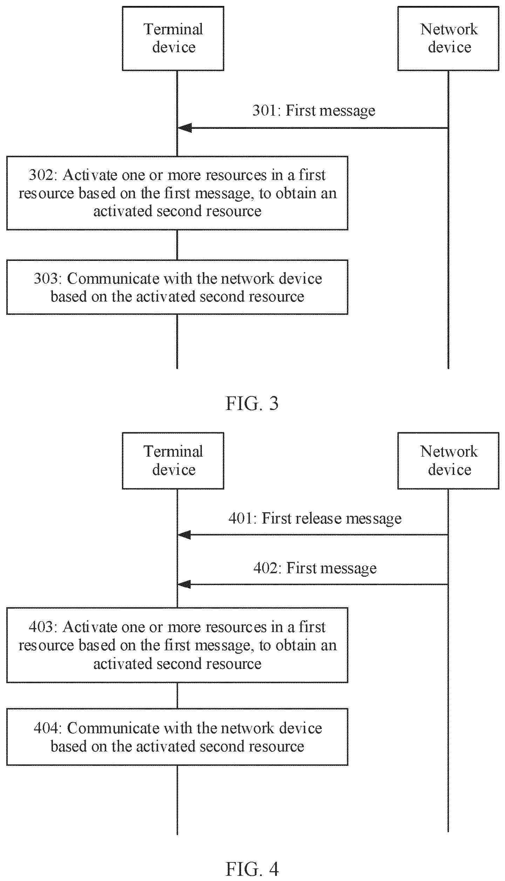

FIG. 3 is a schematic flowchart of a data transmission method according to an embodiment of this application. A terminal device in FIG. 3 is the terminal device 20 in FIG. 1, and a network device in FIG. 3 is the network device 10 in FIG. 1. As shown in FIG. 3, the method includes but is not limited to the following steps.

301: The network device sends a first message to the terminal device. Correspondingly, the terminal device in an idle state or an inactive state receives the first message sent by the network device.

The first message includes first indication information, and the first indication information is used to activate one or more resources in a first resource.

The first resource includes a BWP resource and/or an SPS resource.

Optionally, if the first resource is the BWP resource, the first indication information indicates to activate one or more of the BWP resources. If the first resource is the SPS resource, the first indication information indicates to activate one or more of the SPS resources. If the first resource is the BWP resource and the SPS resource, the first indication information indicates to activate the one or more of the BWP resources; the first indication information indicates to activate the one or more of the SPS resources; or the first indication information indicates to activate the one or more of the BWP resources and activate the one or more of the SPS resources.

Optionally, the BWP resource includes one or more uplink BWP resources and/or one or more downlink BWP resources.

Optionally, the first indication information includes a first field, or the first indication information includes a second field, or the first indication information includes a first field and a second field.

If the first indication information includes the first field, the first field indicates that the one or more resources in the first resource are in an active state. The first field is a field negotiated by the terminal device and the network device in advance. To be specific, the terminal device may determine, based on the first field, which resource in the first resource is in the active state.

For example, the first resource includes a first uplink BWP resource, a second uplink BWP resource, and a third uplink BWP resource. When the first field is 010, from left to right, a first 0 indicates that the first uplink BWP resource is in an inactive state, a second 0 indicates that the second uplink BWP resource is in the active state, and a third 0 indicates that the third uplink BWP resource is in the inactive state.

The first indication information includes the second field, and the second field indicates that one or more resources that are in the first resource and that correspond to an identifier of the second resource are in the active state.

For example, the first resource includes the first uplink BWP resource, the second uplink BWP resource, and the third uplink BWP resource. The identifier of the second resource includes an identifier of the second uplink BWP resource and an identifier of the third uplink BWP resource. To be specific, the second field indicates that the second uplink BWP resource and the third uplink BWP resource are in the active state.

If the first indication information includes the first field and the second field, the first indication information includes the first field which in this case indicates that the one or more resources that are in the first resource and that correspond to the identifier of the second resource indicated by the second field are in the active state.

Optionally, the first message is a paging message, and the paging message includes an identifier of the terminal device.

Optionally, an IE of the paging message is as follows:

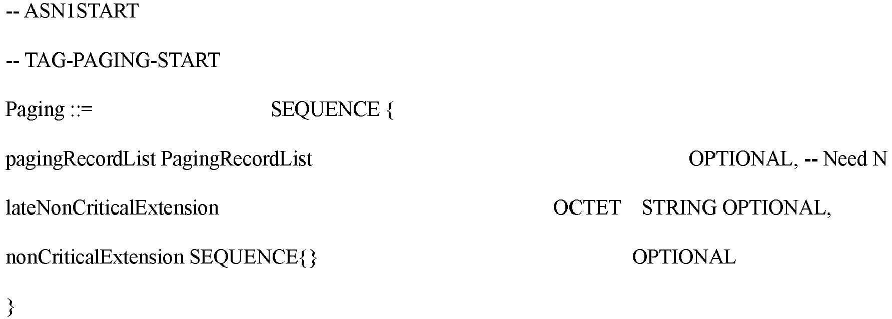

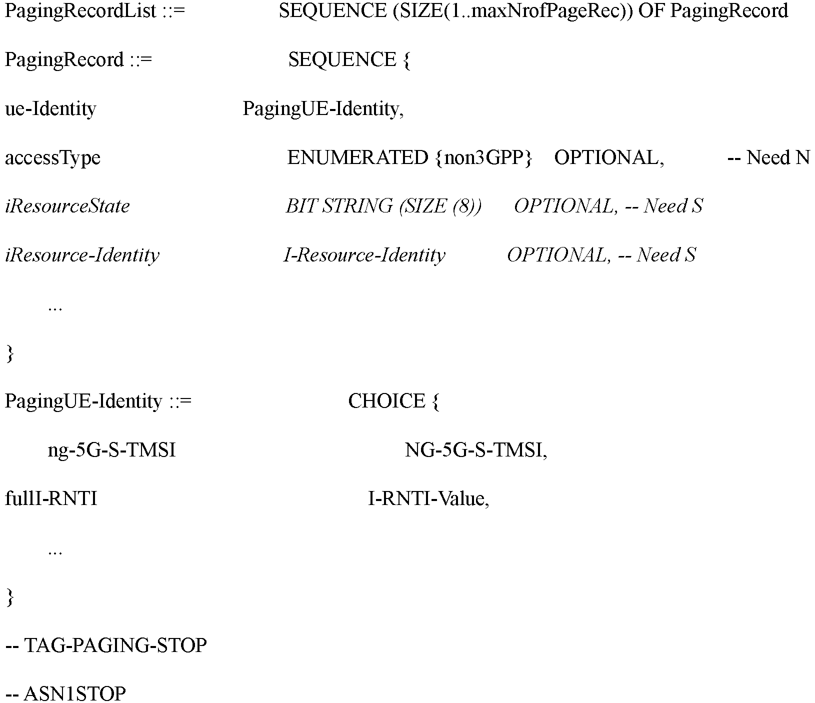

Optionally, with reference to the IE of the paging message, a resource state (iResourceState) indicates a state of the one or more resources in the first resource. For example, the resource state (iResourceState) indicates that the one or more resources in the first resource are in the active state and/or the inactive state, or the resource state (iResourceState) indicates that the one or more resources in the first resource corresponding to the identifier of the second resource are in the active state, or the resource state (iResourceState) indicates that the one or more resources in the first resource corresponding to an identifier of the third resource are in the inactive state. Further, the resource state may be represented by using bit information. When the resource state is represented by using the bit information, in the bit information, from left to right, a first bit value represents the first resource in the first resource, a second bit value represents the second resource in the first resource, and so on. Details are not described herein again. Which resource in the first resource is the first resource and which resource is the second resource may be fixed, configured by the network device, or specified in a protocol. This is not limited herein. In addition, when the bit value is 1, it indicates that the resource is in the active state, and when the bit value is 0, it indicates that the resource is in the inactive state. Alternatively, when the bit value is 0, it indicates that the resource is in the active state, and when the bit value is 1, it indicates that the resource is in the inactive state. In this application, which bit value indicates that the resource is in the active state and which bit value indicates that the resource is in the inactive state are not limited.

For example, refer to the IE of the paging message. The resource state is represented by using eight bits. For example, if the resource state is 01000000, the second resource in the first resource is in the active state, and a resource other than the second resource in the first resource is in the inactive state.

Optionally, refer to the IE of the paging message. A resource identifier (iResource-Identity) indicates states of one or more resources that are in the first resource and that correspond to the resource identifier. The resource identifier includes the identifier of the second resource or the identifier of the third resource. For example, the resource identifier indicates that the one or more resources corresponding to the resource identifier in the first resource are in the active state or the inactive state.

Optionally, if the first indication information includes the first field, the first field may be the resource state (iResourceState). In this case, the resource state indicates that the one or more resources in the first resource are in the active state.

Optionally, refer to the IE of the paging message. If the first indication information includes the second field, and the second field is the resource identifier (iResource-Identity). In this case, the resource identifier is the identifier of the second resource, and the resource identifier indicates that one or more resources that are in the first resource and that correspond to the identifier of the second resource are in the active state.

Optionally, refer to the IE of the paging message. If the first indication information includes the first field and the second field, the first field is the resource state (iResourceState), and the second field is the resource identifier (iResource-Identity). In this case, the resource identifier is the identifier of the second resource, and the resource state indicates that the one or more resources corresponding to the identifier of the second resource in the first resource are in the active state.

302: The terminal device in the idle state or the inactive state activates the one or more resources in the first resource based on the first message, to obtain an activated second resource.

That the terminal device in the idle state or the inactive state activates the one or more resources in the first resource based on the first message, to obtain an activated second resource includes: The terminal device in the idle state or the inactive state activates the one or more resources in the first resource based on the first indication information, to obtain the activated second resource.

303: The terminal device in the idle state or the inactive state communicates with the network device based on the activated second resource.

Optionally, that the terminal device in the idle state or the inactive state communicates with the network device based on the activated second resource includes: If the first resource is the BWP resource, the terminal device in the idle state or the inactive state sends uplink data to the network device based on the activated second resource, and/or the terminal device in the idle state or the inactive state receives downlink data sent by the network device based on the activated second resource; if the first resource is the SPS resource, the terminal device in the idle state or the inactive state receives downlink data sent by the network device based on the activated second resource; or if the first resource includes the BWP resource and the SPS resource, the terminal device in the idle state or the inactive state sends uplink data to the network device based on the activated second resource, and/or the terminal device in the idle state or the inactive state receives downlink data sent by the network device based on the activated second resource.

Optionally, if the first resource is an uplink BWP resource, the terminal device in the idle state or the inactive state sends uplink data to the network device based on the activated second resource; if the first resource is a downlink BWP resource, the terminal device in the idle state or the inactive state receives downlink data sent by the network device based on the activated second resource; or if the first resource includes an uplink BWP resource and a downlink BWP resource, the terminal device in the idle state or the inactive state sends uplink data to the network device based on the activated second resource, and the terminal device in the idle state or the inactive state receives downlink data sent by the network device based on the activated second resource.

Optionally, if the first resource is an uplink BWP resource and the SPS resource, the terminal device in the idle state or the inactive state sends uplink data to the network device based on the activated second resource, and the terminal device in the idle state or the inactive state receives downlink data sent by the network device based on the activated second resource.

Optionally, the uplink data includes assistance data involved in a positioning process, such as positioning assistance data, location information of the terminal device, or positioning measurement information or a sounding reference signal of the terminal device.

Optionally, steps 301 to 303 in FIG. 3 are applicable to a scenario in which a terminal device in an idle state or an inactive state sends a signal to a network device, or a scenario in which a terminal device in an idle state or an inactive state receives a signal sent by a network device, and are further applicable to a scenario in which a terminal device in an idle state or an inactive state needs to perform cell reselection. Steps 301 to 303 in FIG. 3 are not only applicable to a scenario in which a terminal device in an idle state or an inactive state does not perform cell reselection, but also applicable to a scenario in which a terminal device in an idle state or an inactive state needs to perform cell reselection. When the terminal device needs to perform cell reselection, the terminal device is handed over from a network device being accessed before cell reselection to a network device being accessed after cell reselection. The network device accessed by the terminal device before cell reselection is referred to as a first network device or a source network device, and the network device accessed by the terminal device after cell reselection is referred to as a second network device. In this case, the network device in steps 301 to 303 in FIG. 3 may be the first network device (source network device) or the second network device (target network device). This is not limited in this application.

The following embodiments respectively describe the scenario in which the terminal device in the idle state or the inactive state sends the signal to the network device, or the scenario in which the terminal device in the idle state or the inactive state receives the signal sent by the network device, and the scenario in which the terminal device in the idle state or the inactive state needs to perform cell reselection.

It can be learned that in the foregoing technical solution, the first message is sent to the terminal device in the idle state or the inactive state, so that the terminal device in the idle state or the inactive state activates the one or more resources in the first resource based on the first message. The terminal device in the idle state or the inactive state can transmit data with the network device based on an activated BWP resource and/or an activated SPS resource. This implements continuous or periodic data transmission. In addition, because the terminal device implements continuous or periodic data transmission when the terminal device does not establish a connection to the network device, energy consumption of the terminal device is reduced.

Optionally, the method further includes: The first message further includes second indication information, and the second indication information is used to deactivate the one or more resources in the first resource; and deactivating the one or more resources in the first resource based on the second indication information, to obtain a deactivated third resource.

Optionally, if the first resource is the BWP resource, the second indication information indicates to deactivate one or more of the BWP resources. If the first resource is the SPS resource, the second indication information indicates to deactivate the one or more of the SPS resources. If the first resource is the BWP resource and the SPS resource, the second indication information indicates to deactivate the one or more of the BWP resources; the second indication information indicates to deactivate the one or more of the SPS resources; or the second indication information indicates to deactivate the one or more of the BWP resources and deactivate the one or more of the SPS resources.

Optionally, the second indication information includes a third field, and the third field indicates that the one or more resources in the first resource are in the inactive state. The third field is a field negotiated by the terminal device and the network device in advance. To be specific, the terminal device may determine, based on the third field, which resource in the first resource is in the inactive state.

For example, the first resource includes the first uplink BWP resource, the second uplink BWP resource, and the third uplink BWP resource. When the third field is 010, from left to right, a first 0 indicates that the first uplink BWP resource is in an inactive state, a second 0 indicates that the second uplink BWP resource is in the active state, and a third 0 indicates that the third uplink BWP resource is in the inactive state.

Optionally, the third field may be the same as or different from the first field. This is not limited herein.

Optionally, refer to the IE of the paging message. The third field is the resource state (iResourceState). In this case, the resource state indicates that the one or more resources in the first resource are in the inactive state.

Optionally, the second indication information includes a fourth field, and the fourth field indicates that one or more resources corresponding to an identifier of the third resource in the first resource are in the inactive state.

Optionally, refer to the IE of the paging message. The second indication information includes the fourth field, and the fourth field is a resource identifier. In this case, the resource identifier is the identifier of the third resource, and the resource identifier indicates that the one or more resources that are in the first resource and that correspond to the identifier of the third resource are in the inactive state.

It can be learned that in the foregoing technical solution, the terminal device can deactivate the resource based on the indication information.

In a possible implementation, the network device may separately deliver first messages that indicate that different resources are in the active state and/or the inactive state, so that the terminal device in the idle state or the inactive state includes the first messages that indicate that the different resources are in the active state and/or the inactive state, to activate and/or deactivate a resource. For example, the first resource includes the first uplink BWP resource and the second uplink BWP resource. At a first moment, the first uplink BWP resource is in the active state, and the second uplink BWP resource is in the inactive state. At a second moment, the first uplink BWP resource is in the inactive state, and the second uplink BWP resource is in the active state. In other words, a state of the resource may be switched at different moments. For a specific implementation, refer to the foregoing description. Details are not described herein again.

FIG. 4 is a schematic flowchart of another data transmission method according to an embodiment of this application. A terminal device in FIG. 4 is the terminal device 20 in FIG. 1, and a network device in FIG. 4 is the network device 10 in FIG. 1. As shown in FIG. 4, the method is applicable to a scenario in which a terminal device in an idle state or an inactive state sends a signal to a network device, or a terminal device in an idle state or an inactive state receives a signal sent by a network device. The method includes but is not limited to the following steps.

401: The terminal device receives a first release message sent by the network device, and correspondingly, the network device sends the first release message to the terminal device.

Optionally, the first release message indicates the terminal device to reserve a first resource after entering the idle state or the inactive state, or the first release message includes configuration information of the first resource.

Optionally, the first release message includes third indication information, and the third indication information indicates the terminal device to reserve the first resource after entering the idle state or the inactive state. The third indication information includes an identifier of the first resource, and the third indication information indicates the terminal device to reserve, after entering the idle state or the inactive state, the first resource corresponding to the identifier of the first resource.

Optionally, the first release message includes fourth indication information, and the fourth indication information includes the configuration information of the first resource.

Optionally, the first release message is sent by a network device in a cell existing before the terminal device performs cell reselection or a network device in a cell in which the terminal device is currently located.

Optionally, the first release message further indicates the terminal device to release a connection between the terminal device and a network device in a cell existing before the terminal device performs cell reselection or a network device in a cell in which the terminal device is currently located.

Optionally, the first release message is a first RRC release message.

For example, the third indication information may be, for example, a SuspendConfig field. The SuspendConfig field includes the identifier of the first resource. The SuspendConfig field indicates the terminal device to reserve, after entering the idle state or the inactive state, the first resource corresponding to the identifier of the first resource. The fourth indication information may be, for example, a SuspendConfig field, and the SuspendConfig field includes the configuration information of the first resource.

Optionally, for the first resource, refer to the description about the first resource in FIG. 3. Details are not described herein again.

Optionally, if the first resource is a BWP resource, the configuration information of the first resource includes an SCS, a cyclic prefix (cyclic prefix, CP), a frequency domain location, a size (an indication manner is an RIV), an ID, a PDCCH in the BWP, and a common parameter and a dedicated parameter (generic parameters and dedicate parameters) of a PDSCH in the BWP. If the first resource is an SPS resource, the configuration information of the first resource includes a CS-RNTI and periodicity. If the first resource includes a BWP resource and an SPS resource, the configuration information of the first resource includes: an SCS, a cyclic prefix (cyclic prefix, CP), a frequency domain location, a size (an indication manner is an RIV), an ID, a PDCCH in the BWP, a common parameter and a dedicated parameter (generic parameters and dedicate parameters) of a PDSCH in the BWP, a CS-RNTI, and periodicity.

Steps 402 to 404 are the same as steps 301 to 303 in FIG. 3, and details are not described herein again.

It can be learned that in the foregoing technical solution, the network device in the cell in which the terminal device is located before the terminal device performs cell reselection or the network device in the cell in which the terminal device is currently located configures the first resource for the terminal device, and sends the first message to the terminal device in the idle state or the inactive state, so that the terminal device in the idle state or the inactive state activates the one or more resources in the first resource based on the first message. Therefore, the terminal device in the idle state or the inactive state can communicate with the network device based on an activated BWP resource and/or an activated SPS resource. This implements continuous or periodic data transmission. In addition, because the terminal device implements continuous or periodic data transmission when the terminal device does not establish a connection to the network device, energy consumption of the terminal device is reduced.

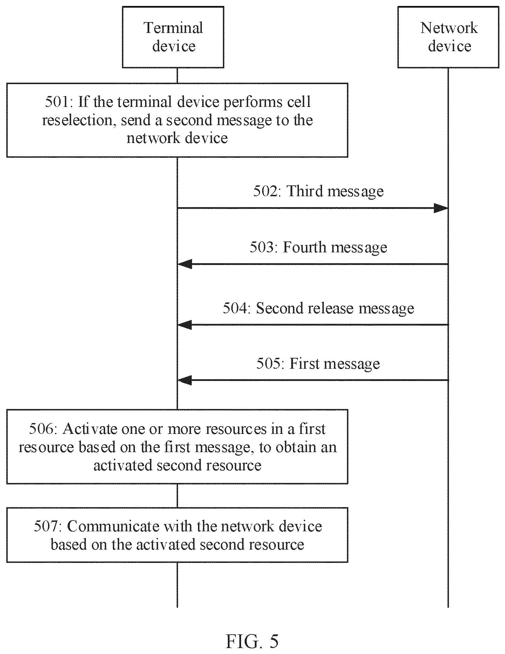

FIG. 5 is a schematic flowchart of still another data transmission method according to an embodiment of this application. A terminal device in FIG. 5 is the terminal device 20 in FIG. 1, and a network device in FIG. 5 is the network device 10 in FIG. 1. As shown in FIG. 5, in the method, in a scenario in which the terminal device in an idle state or an inactive state needs to perform cell reselection, the method includes but is not limited to the following steps.

501: The terminal device in the idle state or the inactive state sends a second message to the network device. Correspondingly, the network device receives the second message sent by the terminal device.

Optionally, if the terminal device performs cell reselection, the second message is used to initiate random access to the network device, and the network device is a network device in a cell obtained after the terminal device performs cell reselection.

Optionally, when the terminal device performs cell reselection, the terminal device is handed over from a network device being accessed before cell reselection to a network device being accessed after cell reselection. A network device accessed by the terminal device before cell reselection is referred to as a first network device or a source network device, and a network device accessed by the terminal device after cell reselection is referred to as a second network device. In this case, the network device in steps 401 to 404 in FIG. 4 is the first network device or a source network device, and the network device in steps 501 to 507 in FIG. 5 are the second network device or a target network device.

Optionally, the first network device in FIG. 4 may be the same as the second network device in FIG. 5. In other words, after performing cell reselection, the terminal device still uses the first network device as a network device to which the terminal device is connected after cell reselection. Alternatively, the first network device in FIG. 4 may be different from the second network device in FIG. 5. In other words, after performing cell reselection, the terminal device uses a second network device in a new cell to which the terminal device is handed over as a network device to which the terminal device is connected after cell reselection.

It should be noted that in this application, when performing cell reselection, the terminal device in the idle state or the inactive state may initiate random access to a plurality of network devices in a plurality of cells. A cell in which the second network device is located is a cell successfully accessed by the terminal device in the idle state or the inactive state. For another cell in the plurality of cells other than the cell in which the second network device is located, the terminal device in the idle state or the inactive state fails to access. A network device accessed by the terminal device in the idle state or the inactive state after cell reselection in this application is the network device in the cell successfully accessed by the terminal device.

502: The network device receives a third message sent by the terminal device. Correspondingly, the terminal device in the idle state or the inactive state sends the third message to the network device.

Optionally, the third message is used to request a first resource. The third message includes fifth indication information, and the fifth indication information is used to request the first resource.

For example, the fifth indication information is represented by bit information. 0 is used to request the first resource, or 1 is used to request the first resource.

Optionally, the third message is a Msg3 or a MsgA.

Optionally, step 502 may be performed or not performed. This is not limited in this application.

503: The terminal device in the idle state or the inactive state receives a fourth message sent by the network device. Correspondingly, the network device sends the fourth message to the terminal device.

Optionally, the fourth message includes configuration information of the first resource. For the configuration information of the first resource, refer to the description of the configuration information of the first resource in FIG. 4. Details are not described herein again.

Optionally, the fourth message is a Msg4, a MsgB, or a system message. It may be understood that if the fourth message is the system message, it indicates that the network device sends the fourth message to the terminal device in the idle state or the inactive state in a broadcast manner. In this case, the terminal device does not establish a connection to the network device.

Optionally, the Msg4 or the MsgB includes an identifier of the first resource.

For example, if the first resource includes a first uplink BWP resource and a first downlink BWP resource, the Msg4 or the MsgB includes an identifier of the first uplink BWP resource and an identifier of the first downlink BWP resource.

504: After the network device establishes an RRC connection to the terminal device, the terminal device receives a second release message sent by the network device. Correspondingly, the network device sends the second release message to the terminal device.

Optionally, the second release message indicates the terminal device to release the RRC connection.

Optionally, the second release message is a second RRC release message.

Steps 505 to 507 are the same as steps 301 to 303 in FIG. 3, and details are not described herein again.

It can be learned that in the foregoing technical solution, if the terminal device performs cell reselection, the terminal device in the idle state or the inactive state sends the second message to the network device, so that the network device perceives that the terminal device is in a service range of the terminal device. In addition, the network device of the cell obtained after the terminal device performs cell reselection configures the first resource for the terminal device, and sends the first message to the terminal device in the idle state or the inactive state, so that the terminal device in the idle state or the inactive state activates one or more of the first resources based on the first message. Therefore, the terminal device in the idle state or the inactive state can communicate with the network device based on an activated BWP resource and/or an activated SPS resource. This implements continuous or periodic data transmission. In addition, because the terminal device implements continuous or periodic data transmission when the terminal device does not establish a connection to the network device, energy consumption of the terminal device is reduced.

Optionally, the method further includes: The second network device sends a fifth message to the first network device. The fifth message indicates the first network device to release a resource configured for the terminal device. The first network device is a network device before the terminal device performs cell reselection, and the second network device is a network device after the terminal device performs cell reselection.

Optionally, if there is an Xn interface between the first network device and the second network device, the Xn interface is a name, and the Xn interface may be a communication interface between the first network device and the second network device. The Xn interface may change in different communication systems, but functions and functions thereof are similar. Therefore, the name is used as a description example in this application, and the name is not limited.

Optionally, that the second network device sends a fifth message to the first network device includes: The second network device sends the fifth message to the first network device through the Xn interface.

Optionally, if there is no Xn interface between the first network device and the second network device, the second network device sends the fifth message to a mobility management network element, and the mobility management network element sends the fifth message to the first network device.

The mobility management network element may be a chip, or may be a device including a chip. The mobility management network element is mainly used for registration, mobility management, and a tracking area update procedure for a terminal device in a mobile network. The mobility management network element terminates a non-access stratum (non-access stratum, NAS) message, completes registration management, connection management, reachability management, tracking area list (track area list, TA list) allocation, mobility management, and the like, and transparently routes a session management (session management, SM) message to a session management network element. In 5G communication, the mobility management network element may be an AMF network element in a core network. In future communication such as 6th generation (6th generation, 6G) communication, the mobility management network element may still be an AMF network element or have another name. This is not limited in this application.

It can be learned that in the foregoing technical solution, the fifth message is sent to the first network device, so that the first network device can release the resource configured for the terminal device.

Optionally, the method further includes: The second network device receives a sixth message sent by the first network device. The sixth message indicates the second network device to send the first message in a cell of the second network device.

Optionally, if there is the Xn interface between the first network device and the second network device, that the second network device receives a sixth message sent by the first network device includes: The second network device receives, through the Xn interface, the sixth message sent by the first network device.

Optionally, if there is no Xn interface between the first network device and the second network device, the second network device receives the sixth message sent by the mobility management network element, and the mobility management network element receives the sixth message sent by the first network device.

It can be learned that in the foregoing technical solution, the sixth message sent by the first network device is received, so that the second network device can send the first message in the cell of the second network device. Therefore, a search range is narrowed, and efficiency of obtaining the first message by the terminal device is improved.

The foregoing mainly describes the solutions provided in this application from the perspective of interaction between devices. It may be understood that, to implement the foregoing functions, the foregoing implementation devices include corresponding hardware structures and/or software modules for performing the functions. A person of ordinary skill in the art should easily be aware that, in combination with the examples described in embodiments disclosed in this specification, modules, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the network device may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

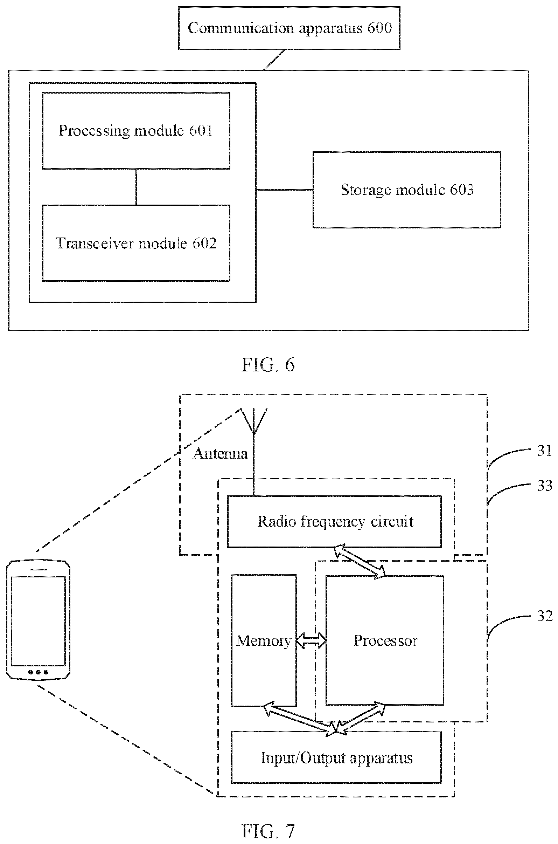

When an integrated module is used, FIG. 6 is a schematic diagram of a structure of a communication apparatus according to an embodiment of this application. A communication apparatus 600 may be used in the method shown in FIG. 3, FIG. 4, or FIG. 5. As shown in FIG. 6, the communication apparatus 600 includes a processing module 601 and a transceiver module 602, or the communication apparatus 600 includes a transceiver module 602. The processing module 601 may be one or more processors, and the transceiver module 602 may be a transceiver or a communication interface. The communication apparatus may be configured to implement the terminal device or the network device in any one of the foregoing method embodiments, or configured to implement functions of the device in any one of the foregoing method embodiments. For example, the communication apparatus is a terminal device or a network device. The device or the network function may be a network element in a hardware device, a software function running on dedicated hardware, or a virtualized function instantiated on a platform (for example, a cloud platform). Optionally, the communication apparatus 600 may further include a storage module 603, configured to store program code and data of the communication apparatus 600.

For example, when the communication apparatus is used as the terminal device or a chip used in a terminal device, the communication apparatus 600 includes the processing module 601 and the transceiver module 602, and performs the steps performed by the terminal device in the foregoing method embodiments. The transceiver module 602 is configured to support communication with a network device and the like, and specifically perform the sending and/or receiving action performed by the terminal device in FIG. 6. Details are not described herein again. For example, the terminal device is supported in performing one or more of step 303, step 401, step 501, step 503, and step 504, and/or another process of the technology described in this specification. The processing module 601 may be configured to support the communication apparatus 600 in performing the processing actions in the foregoing method embodiments. Details are not described herein again. For example, the terminal device is supported in performing step 302, and/or another process of the technology described in this specification.

For example, when the communication apparatus is used as the network device or is a chip applied to a network device, the communication apparatus 600 includes the transceiver module 602, and performs the steps performed by the network device in the foregoing method embodiments. The transceiver module 602 is configured to support communication with a terminal device and the like, and specifically perform the sending and/or receiving action performed by the network device in FIG. 6. Details are not described herein again. For example, the network device is supported in performing one or more of step 301 and step 502, and/or another process of the technology described in this specification.

In a possible implementation, when the communication apparatus is a chip, the transceiver module 602 may be an interface, a pin, a circuit, or the like. The interface may be configured to input to-be-processed data to a processor, and may output a processing result of the processor to the outside. During specific implementation, the interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The interface is connected to the processor through a bus.

The processing module 601 may be a processor. The processor may execute computer-executable instructions stored in a storage module, so that the chip performs the methods according to the embodiments in FIG. 3, FIG. 4, or FIG. 5.

Further, the processor may include a controller, an arithmetic unit, and a register. For example, the controller is mainly responsible for decoding instructions and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS), an advanced reduced instruction set computing machines (advanced RISC machines, ARM) architecture, a network processor (network processor, NP) architecture, or the like. The processor may be a single-core or multi-core processor.

The storage module 603 may be a storage module inside the chip, for example, a register or a cache. Alternatively, the storage module may be a storage module located outside the chip, for example, a read-only memory (read-only memory, ROM), another type of static storage device that can store static information and instructions, or a random access memory (random access memory, RAM).

It should be noted that a function corresponding to each of the processor and the interface may be implemented by using a hardware design, may be implemented by using a software design, or may be implemented by a combination of software and hardware. This is not limited herein.

FIG. 7 is a schematic diagram of a structure of a simplified terminal device according to an embodiment of this application. For ease of understanding and convenience of figure illustration, an example in which the terminal device is a mobile phone is used in FIG. 7. As shown in FIG. 7, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 7 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 7, the terminal device includes a receiving module 31, a processing module 32, and a sending module 33. The receiving module 31 may also be referred to as a receiver, a receiver circuit, or the like. The sending module 33 may also be referred to as a transmitter, a transmitter circuit, or the like. The processing module 32 may also be referred to as a processor, a processing board, a processing apparatus, or the like.

For example, the processing module 32 is configured to perform functions of the terminal device in the embodiment shown in FIG. 3, FIG. 4, or FIG. 5.

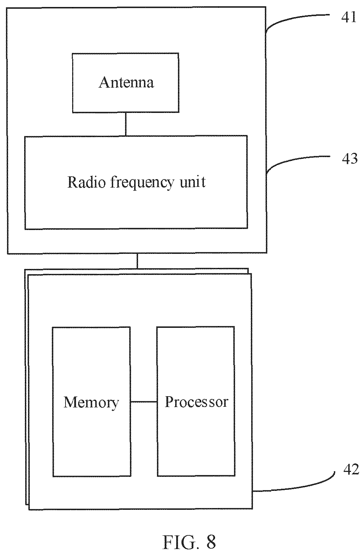

FIG. 8 is a schematic diagram of a structure of a simplified access network device according to an embodiment of this application. The access network device includes a part 42 and a part for radio frequency signal sending/receiving and conversion. The part for radio frequency signal sending/receiving and conversion further includes a receiving module 41 and a sending module 43 (which may also be collectively referred to as a transceiver module). The part for radio frequency signal sending/receiving and conversion is mainly configured to send/receive a radio frequency signal and perform conversion between the radio frequency signal and a baseband signal. The part 42 is mainly configured to perform baseband processing, control the access network device, and the like. The receiving module 41 may also be referred to as a receiver, a receiver circuit, or the like. The sending module 43 may also be referred to as a transmitter, a transmitter circuit, or the like. The part 42 is usually a control center of the access network device, may be usually referred to as a processing module, and is configured to control the access network device to perform the steps performed by the access network device in FIG. 3, FIG. 4, or FIG. 5. For details, refer to the foregoing descriptions of the related parts.

The part 42 may include one or more boards. Each board may include one or more processors and one or more memories. The processor is configured to read and execute a program in the memory to implement a baseband processing function and control the access network device. If there are a plurality of boards, the boards may be interconnected to improve a processing capability. In an optional implementation, the plurality of boards may share one or more processors, the plurality of boards may share one or more memories, or the plurality of boards may share one or more processors at the same time.

For example, for the access network device, the sending module 43 is configured to perform the function of the access network device in the embodiments shown in FIG. 3, FIG. 4, or FIG. 5.

This application further provides a communication apparatus, including a memory and a processor. The memory is configured to store computer-executable instruction. The processor is configured to execute the computer-executable instructions stored in the memory. Execution of the computer-executable instructions stored in the memory enables the processor to perform the method in any possible implementation in FIG. 3, FIG. 4, or FIG. 5.

This application further provides a computer-readable storage medium. The computer-readable storage medium stores a computer program. When the computer program is executed by a computer, the computer is enabled to implement the method in any one of the possible implementations in FIG. 3, FIG. 4, or FIG. 5.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, replacement, improvement, or the like made based on the technical solutions of this application shall fall within the protection scope of this application, as long as it falls within the scope of the appended claims.

## Claims

1. A data transmission method, comprising:
receiving (301, 402, 505), by a terminal device (20) in an idle state or an inactive state, a first message sent by a network device (10);
activating (302, 403, 506), by the terminal device (20) in the idle state or the inactive state, one or more resources in a first resource based on the first message, to obtain an activated second resource, wherein the first resource comprises a bandwidth part, BWP. resource and/or a semi-persistent scheduling, SPS, resource; and
communicating (303, 404, 507), by the terminal device (20) in the idle state or the inactive state, with the network device (10) based on the activated second resource;
the method **characterised in that** the activating one or more resources in a first resource based on the first message, to obtain an activated second resource, further comprises:
the first message comprises first indication information including a field, and the first indication information is used to activate the one or more resources in the first resource, wherein the field indicates that one or more resources that are in the first resource and that correspond to an identifier of the activated second resource are in the active state; and
activating the one or more resources in the first resource based on the first indication information, to obtain the activated second resource.

2. The method according to claim 1, wherein before the receiving (301, 402, 505) a first message sent by a network device (10), the method further comprises:
receiving (401) a first release message sent by the network device (10), wherein the first release message indicates the terminal device (20) to reserve the first resource after entering the idle state or the inactive state, or the first release message comprises configuration information of the first resource.

3. The method according to claim 1, wherein if the terminal device (20) performs cell reselection, before the receiving (301, 402, 505) a first message sent by a network device (10), the method further comprises:
sending a second message to the network device (10), wherein the second message is used to initiate random access to the network device (10), and the network device (10) is a network device (10) in a cell reselected by the terminal device (20);
optionally, wherein the method further comprises:
sending (502) a third message to the network device (10), wherein the third message is used to request the first resource; and
receiving (503) a fourth message sent by the network device (10), wherein the fourth message comprises configuration information of the first resource.

4. The method according to claim 3, wherein after the network device (10) establishes a radio resource control, RRC, connection to the terminal device (20), the method further comprises:
receiving (504) a second release message sent by the network device, wherein the second release message indicates the terminal device to release the RRC connection.

5. The method according to any one of claims 1 to 4, wherein the method further comprises:
the first message further comprises second indication information, and the second indication information is used to deactivate the one or more resources in the first resource; and
deactivating the one or more resources in the first resource based on the second indication information, to obtain a deactivated third resource.

6. A data transmission method, comprising:
sending (301, 402, 505), by a network device (10), a first message to a terminal device (20); and
communicating (303, 404, 507), by the network device (10), with the terminal device (20) based on an activated second resource, wherein the activated second resource is obtained by the terminal device (20) in an idle state or an inactive state by activating one or more resources in a first resource based on the first message, and the first resource comprises a bandwidth part, BWP, resource and/or a semi-persistent scheduling, SPS, resource;
the method **characterised in that** the first message comprises first indication information including a field, and the first indication information is used to activate the one or more resources in the first resource, wherein the field indicates that one or more resources that are in the first resource and that correspond to an identifier of the activated second resource are in the active state.

7. The method according to claim 6, wherein before the sending (301, 402, 505) a first message to a terminal device (20), the method further comprises:
sending (401) a first release message to the terminal device (20), wherein the first release message indicates the terminal device (20) to reserve the first resource after entering the idle state or the inactive state, or the first release message comprises configuration information of the first resource.

8. The method according to claim 6, wherein before the sending (301, 402, 505) a first message to a terminal device (20), the method further comprises:
receiving a second message sent by the terminal device (20), wherein the second message is used to initiate random access to a network device (10), and the network device (10) is a network device (10) in a cell reselected by the terminal device;
optionally, wherein the method further comprises:
receiving (502) a third message sent by the terminal device (20), wherein the third message is used to request the first resource; and
sending (503) a fourth message to the terminal device (20), wherein the fourth message comprises the configuration information of the first resource.

9. The method according to claim 8, wherein after the network device establishes a radio resource control, RRC, connection to the terminal device, the method further comprises:
sending (504) a second release message to the terminal device (20), wherein the second release message indicates the terminal device (20) to release the RRC connection.

10. The method according to any one of claims 6 to 9, wherein the first message further comprises second indication information, and the second indication information is used to deactivate the one or more resources in the first resource.

11. A terminal device (20), wherein the terminal device (20) is in an idle state or an inactive state, and the terminal device (20) comprises a transceiver module (602) and a processing module (601);
the transceiver module (602) is configured to receive a first message sent by a network device (10);
the processing module (601) is configured to activate one or more resources in a first resource based on the first message, to obtain an activated second resource, wherein the first resource comprises a bandwidth part, BWP, resource and/or a semi-persistent scheduling, SPS, resource; and
the transceiver module (602) is configured to communicate with the network device (10) based on the activated second resource;
the terminal device (20) **characterised in that**:
the first message comprises first indication information including a field, and the first indication information is used to activate the one or more resources in the first resource, wherein the field indicates that one or more resources that are in the first resource and that correspond to an identifier of the activated second resource are in the active state; and
the processing module is further configured to activate the one or more resources in the first resource based on the first indication information, to obtain the activated second resource.

12. The terminal device (20) according to claim 11, wherein the terminal device (20) is further configured to perform the method according to any of claims 2 to 5.

13. A network device (10), wherein the network device (10) comprises a transceiver module (602) and a processing module (60)1;
the transceiver module (602) is configured to send a first message to a terminal device (20); and
the processing module (601) is configured to communicate with the terminal device (20) based on an activated second resource, wherein the activated second resource is obtained by the terminal device (20) in an idle state or an inactive state by activating one or more resources in a first resource based on the first message, and the first resource comprises a bandwidth part, BWP, resource and/or a semi-persistent scheduling, SPS, resource;
the network device (10) **characterised in that** the first message comprises first indication information including a field, and the first indication information is used to activate the one or more resources in the first resource, wherein the field indicates that one or more resources that are in the first resource and that correspond to an identifier of the activated second resource are in the active state.

14. The network device (10) according to claim 13, wherein the network device (10) is further configured to perform the method of any of claims 7 to 10.

15. A computer-readable storage medium, wherein the computer-readable storage medium stores a computer program, and when the computer program is executed by processing modules of a terminal device (20), the terminal device (20) is enabled to implement the method according to any one of claims 1 to 5, and when the computer program is executed by a processing modules of a network device (10), the network device (10) is enabled to implement the method according to any one of claims 6 to 10.

## Patentansprüche

1. Datenübertragungsverfahren, umfassend:
Empfangen (301, 402, 505) einer ersten durch eine Netzwerkvorrichtung (10) gesendeten Nachricht durch eine Endgerätevorrichtung (20) in einem Leerlaufzustand oder einem inaktiven Zustand;
Aktivieren (302, 403, 506) einer oder mehrerer Ressourcen in einer ersten Ressource durch die Endgerätevorrichtung (20) in dem Leerlaufzustand oder in dem inaktiven Zustand basierend auf der ersten Nachricht, um eine aktivierte zweite Ressource zu erlangen, wobei die erste Ressource eine Bandbreitenteilressource, BWP-Ressource, und/oder eine semipersistente Planungsressource, SPS-Ressource, umfasst; und
Kommunizieren (303, 404, 507), durch die Endgerätevorrichtung (20) in dem Leerlaufzustand oder in dem inaktiven Zustand, mit der Netzwerkvorrichtung (10) basierend auf der aktivierten zweiten Ressource;
wobei das Verfahren **dadurch gekennzeichnet ist, dass** das Aktivieren einer oder mehrerer Ressourcen in einer ersten Ressource basierend auf der ersten Nachricht, um eine aktivierte zweite Ressource zu erlangen, ferner Folgendes umfasst:
die erste Nachricht umfasst erste Anzeigeinformationen, die ein Feld beinhalten, und die ersten Anzeigeinformationen werden verwendet, um die eine oder die mehreren Ressourcen in der ersten Ressource zu aktivieren, wobei das Feld anzeigt, dass sich eine oder mehrere Ressourcen, die sich in der ersten Ressource befinden und einer Kennung der aktivierten zweiten Ressource entsprechen, in dem aktiven Zustand befinden; und
Aktivieren der einen oder der mehreren Ressourcen in der ersten Ressource basierend auf den ersten Anzeigeinformationen, um die aktivierte zweite Ressource zu erlangen.

2. Verfahren nach Anspruch 1, wobei das Verfahren vor dem Empfangen (301, 402, 505) einer ersten Nachricht, die durch eine Netzwerkvorrichtung (10) gesendet wird, ferner Folgendes umfasst:
Empfangen (401) einer ersten Freigabenachricht, die durch die Netzwerkvorrichtung (10) gesendet wird, wobei die erste Freigabenachricht der Endgerätevorrichtung (20) anzeigt, die erste Ressource nach dem Wechseln in den Leerlaufzustand oder den inaktiven Zustand zu reservieren, oder wobei die erste Freigabenachricht Konfigurationsinformationen der ersten Ressource umfasst.

3. Verfahren nach Anspruch 1, wobei, wenn die Endgerätevorrichtung (20) eine Zellneuauswahl durchführt, das Verfahren vor dem Empfangen (301, 402, 505) einer ersten Nachricht, die durch eine Netzwerkvorrichtung (10) gesendet wird, ferner Folgendes umfasst:
Senden einer zweiten Nachricht an die Netzwerkvorrichtung (10), wobei die zweite Nachricht zum Initiieren eines wahlfreien Zugriffs auf die Netzwerkvorrichtung (10) verwendet wird und die Netzwerkvorrichtung (10) eine Netzwerkvorrichtung (10) in einer durch die Endgerätevorrichtung (20) neu ausgewählten Zelle ist;
wobei das Verfahren optional ferner Folgendes umfasst:
Senden (502) einer dritten Nachricht an die Netzwerkvorrichtung (10), wobei die dritte Nachricht zum Anfordern der ersten Ressource verwendet wird; und
Empfangen (503) einer durch die Netzwerkvorrichtung (10) gesendeten vierten Nachricht, wobei die vierte Nachricht Konfigurationsinformationen der ersten Ressource umfasst.

4. Verfahren nach Anspruch 3, wobei das Verfahren, nachdem die Netzwerkvorrichtung (10) eine Verbindung der Funkressourcensteuerung, RRC-Verbindung, mit der Endgerätevorrichtung (20) hergestellt hat, ferner Folgendes umfasst:
Empfangen (504) einer zweiten Freigabenachricht, die durch die Netzwerkvorrichtung gesendet wird, wobei die zweite Freigabenachricht der Endgerätevorrichtung anzeigt, dass die RRC-Verbindung freizugeben ist.

5. Verfahren nach einem der Ansprüche 1 bis 4, wobei das Verfahren ferner Folgendes umfasst:
die erste Nachricht umfasst ferner zweite Anzeigeinformationen, und die zweiten Anzeigeinformationen werden verwendet, um die eine oder die mehreren Ressourcen in der ersten Ressource zu deaktivieren; und
Deaktivieren der einen oder der mehreren Ressourcen in der ersten Ressource basierend auf den zweiten Anzeigeinformationen, um die deaktivierte dritte Ressource zu erlangen.

6. Datenübertragungsverfahren, umfassend:
Senden (301, 402, 505) einer ersten Nachricht durch eine Netzwerkvorrichtung (10) an eine Endgerätevorrichtung (20); und
Kommunizieren (303, 404, 507), durch die Netzwerkvorrichtung (10), mit der Endgerätevorrichtung (20) basierend auf einer aktivierten zweiten Ressource, wobei die aktivierte zweite Ressource durch die Endgerätevorrichtung (20) in einem Leerlaufzustand oder einem inaktiven Zustand durch Aktivieren einer oder mehrerer Ressourcen in einer ersten Ressource basierend auf der ersten Nachricht erlangt wird, und die erste Ressource eine Bandbreitenteilressource, BWP-Ressource, und/oder eine semipersistente Planungsressource, SPS-Ressource, umfasst;
das Verfahren **dadurch gekennzeichnet ist, dass** die erste Nachricht erste Anzeigeinformationen umfasst, die ein Feld beinhalten, und die ersten Anzeigeinformationen verwendet werden, um die eine oder die mehreren Ressourcen in der ersten Ressource zu aktivieren, wobei das Feld anzeigt, dass sich eine oder mehrere Ressourcen, die sich in der ersten Ressource befinden und einer Kennung der aktivierten zweiten Ressource entsprechen, in dem aktiven Zustand befinden.

7. Verfahren nach Anspruch 6, wobei das Verfahren vor dem Senden (301, 402, 505) einer ersten Nachricht an eine Endgerätevorrichtung (20) ferner Folgendes umfasst:
Senden (401) einer ersten Freigabenachricht an die Endgerätevorrichtung (20) gesendet wird, wobei die erste Freigabenachricht der Endgerätevorrichtung (20) anzeigt, die erste Ressource nach dem Wechseln in den Leerlaufzustand oder den inaktiven Zustand zu reservieren, oder wobei die erste Freigabenachricht Konfigurationsinformationen der ersten Ressource umfasst.

8. Verfahren nach Anspruch 6, wobei das Verfahren vor dem Senden (301, 402, 505) einer ersten Nachricht an eine Endgerätevorrichtung (20) ferner Folgendes umfasst:
Empfangen einer zweiten Nachricht, die durch die Endgerätevorrichtung (20) gesendet wird, wobei die zweite Nachricht zum Initiieren eines wahlfreien Zugriffs auf eine Netzwerkvorrichtung (10) verwendet wird und die Netzwerkvorrichtung (10) eine Netzwerkvorrichtung (10) in einer durch die Endgerätevorrichtung neu ausgewählten Zelle ist;
wobei das Verfahren optional ferner Folgendes umfasst:
Empfangen (502) einer dritten Nachricht, die durch die Endgerätevorrichtung (20) gesendet wird, wobei die dritte Nachricht zum Anfordern der ersten Ressource verwendet wird; und
Senden (503) einer vierten Nachricht an die Endgerätevorrichtung (20), wobei die vierte Nachricht die Konfigurationsinformationen der ersten Ressource umfasst.

9. Verfahren nach Anspruch 8, wobei das Verfahren, nachdem die Netzwerkvorrichtung eine Verbindung der Funkressourcensteuerung, RRC-Verbindung, mit der Endgerätevorrichtung hergestellt hat, ferner Folgendes umfasst:
Senden (504) einer zweiten Freigabenachricht an die Endgerätevorrichtung (20), wobei die zweite Freigabenachricht der Endgerätevorrichtung (20) anzeigt, dass die RRC-Verbindung freizugeben ist.

10. Verfahren nach einem der Ansprüche 6 bis 9, wobei die erste Nachricht ferner zweite Anzeigeinformationen umfasst, und die zweiten Anzeigeinformationen verwendet werden, um die eine oder die mehreren Ressourcen in der ersten Ressource zu deaktivieren.

11. Endgerätevorrichtung (20), wobei sich die Endgerätevorrichtung (20) in einem Leerlaufzustand oder einem inaktiven Zustand befindet und die Endgerätevorrichtung (20) ein Sende-Empfangsmodul (602) und ein Verarbeitungsmodul (601) umfasst;
das Sende-Empfangsmodul (602) dazu konfiguriert ist, eine durch eine Netzwerkvorrichtung (10) gesendete erste Nachricht zu empfangen;
das Verarbeitungsmodul (601) dazu konfiguriert ist, eine oder mehrere Ressourcen in einer ersten Ressource basierend auf der ersten Nachricht zu aktivieren, um eine aktivierte zweite Ressource zu erlangen, wobei die erste Ressource eine Bandbreitenteilressource, BWP-Ressource, und/oder eine semipersistente Planungsressource, SPS-Ressource, umfasst; und das Sende-Empfangsmodul (602) dazu konfiguriert ist, basierend auf der aktivierten zweiten Ressource mit der Netzwerkvorrichtung (10) zu kommunizieren;
wobei die Endgerätevorrichtung (20) **dadurch gekennzeichnet ist, dass**:
die erste Nachricht erste Anzeigeinformationen umfasst, die ein Feld beinhalten, und die ersten Anzeigeinformationen verwendet werden, um die eine oder die mehreren Ressourcen in der ersten Ressource zu aktivieren, wobei das Feld anzeigt, dass sich eine oder mehrere Ressourcen, die sich in der ersten Ressource befinden und einer Kennung der aktivierten zweiten Ressource entsprechen, in dem aktiven Zustand befinden; und
das Verarbeitungsmodul ferner dazu konfiguriert ist, die eine oder die mehreren Ressourcen in der ersten Ressource basierend auf den ersten Anzeigeinformationen zu aktivieren, um die aktivierte zweite Ressource zu erlangen.

12. Endgerätevorrichtung (20) nach Anspruch 11, wobei die Endgerätevorrichtung (20) ferner dazu konfiguriert ist, das Verfahren nach einem der Ansprüche 2 bis 5 durchzuführen.

13. Netzwerkvorrichtung (10), wobei die Netzwerkvorrichtung (10) ein Sende-Empfangsmodul (602) und ein Verarbeitungsmodul (601) umfasst;
das Sende-Empfangsmodul (602) dazu konfiguriert ist, eine erste Nachricht an eine Endgerätevorrichtung (20) zu senden; und
das Verarbeitungsmodul (601) dazu konfiguriert ist, basierend auf einer aktivierten zweiten Ressource mit der Endgerätevorrichtung (20) zu kommunizieren, wobei die aktivierte zweite Ressource durch die Endgerätevorrichtung (20) in einem Leerlaufzustand oder einem inaktiven Zustand durch Aktivieren einer oder mehrerer Ressourcen in einer ersten Ressource basierend auf der ersten Nachricht erlangt wird, und die erste Ressource eine Bandbreitenteilressource, BWP-Ressource, und/oder eine semipersistente Planungsressource, SPS-Ressource, umfasst;
die Netzwerkvorrichtung (10) **dadurch gekennzeichnet ist, dass** die erste Nachricht erste Anzeigeinformationen umfasst, die ein Feld beinhalten, und die ersten Anzeigeinformationen verwendet werden, um die eine oder die mehreren Ressourcen in der ersten Ressource zu aktivieren, wobei das Feld anzeigt, dass sich eine oder mehrere Ressourcen, die sich in der ersten Ressource befinden und einer Kennung der aktivierten zweiten Ressource entsprechen, in dem aktiven Zustand befinden.

14. Netzwerkvorrichtung (10) nach Anspruch 13, wobei die Netzwerkvorrichtung (10) ferner dazu konfiguriert ist, das Verfahren nach einem der Ansprüche 7 bis 10 durchzuführen.

15. Computerlesbares Speichermedium, wobei das computerlesbare Speichermedium ein Computerprogramm speichert und bei Ausführung des Computerprogramms durch Verarbeitungsmodule einer Endgerätevorrichtung (20) die Endgerätevorrichtung (20) dazu befähigt ist, das Verfahren nach einem der Ansprüche 1 bis 5 zu implementieren, und bei Ausführung des Computerprogramms durch ein Verarbeitungsmodul einer Netzwerkvorrichtung (10) die Netzwerkvorrichtung (10) dazu befähigt ist, das Verfahren nach einem der Ansprüche 6 bis 10 zu implementieren.

## Revendications

1. Procédé de transmission de données, comprenant :
la réception (301, 402, 505), par un dispositif terminal (20) dans un état de veille ou un état inactif, d'un premier message envoyé par un dispositif de réseau (10) ;
l'activation (302, 403, 506), par le dispositif terminal (20) dans l'état de veille ou l'état inactif, d'une ou plusieurs ressources dans une première ressource à partir du premier message, pour obtenir une seconde ressource activée, dans lequel la première ressource comprend une ressource de partie de bande passante, BWP et/ou une ressource de planification semi-persistante, SPS ; et
la communication (303, 404, 507), par le dispositif terminal (20) dans l'état de veille ou l'état inactif, avec le dispositif de réseau (10) à partir de la seconde ressource activée ;
le procédé étant **caractérisé en ce que** l'activation d'une ou plusieurs ressources dans une première ressource à partir du premier message, pour obtenir une seconde ressource activée, comprend également :
le premier message comprend des premières informations d'indication comportant un champ, et les premières informations d'indication sont utilisées pour activer les une ou plusieurs ressources dans la première ressource, dans lequel le champ indique qu'une ou plusieurs ressources qui se trouvent dans la première ressource et qui correspondent à un identifiant de la seconde ressource activée sont dans l'état actif ; et
l'activation des une ou plusieurs ressources dans la première ressource à partir des premières informations d'indication, pour obtenir la seconde ressource activée.

2. Procédé selon la revendication 1, dans lequel avant la réception (301, 402, 505), d'un premier message envoyé par un dispositif de réseau (10), le procédé comprend également :
la réception (401) d'un premier message de libération envoyé par le dispositif de réseau (10), dans lequel le premier message de libération indique au dispositif terminal (20) de réserver la première ressource après être entré dans l'état de veille ou l'état inactif, ou le premier message de libération comprend des informations de configuration de la première ressource.

3. Procédé selon la revendication 1, dans lequel si le dispositif terminal (20) réalise une resélection de cellule, avant la réception (301, 402, 505), d'un premier message envoyé par un dispositif de réseau (10), le procédé comprend également :
l'envoi d'un deuxième message au dispositif de réseau (10), dans lequel le deuxième message est utilisé pour initier un accès aléatoire au dispositif de réseau (10), et le dispositif de réseau (10) est un dispositif de réseau (10) dans une cellule resélectionnée par le dispositif terminal (20) ;
éventuellement, dans lequel le procédé comprend également :
l'envoi (502) d'un troisième message au dispositif de réseau (10), dans lequel le troisième message est utilisé pour demander la première ressource ; et
la réception (503) d'un quatrième message envoyé par le dispositif de réseau (10), dans lequel le quatrième message comprend des informations de configuration de la première ressource.

4. Procédé selon la revendication 3, dans lequel, après que le dispositif de réseau (10) a établi une connexion de commande de ressources radio, RRC, avec le dispositif terminal (20), le procédé comprend également :
la réception (504) d'un second message de libération envoyé par le dispositif de réseau, dans lequel le second message de libération indique au dispositif terminal de libérer la connexion RRC.

5. Procédé selon l'une quelconque des revendications 1 à 4, dans lequel le procédé comprend également :
le premier message comprend également des secondes informations d'indication, et les secondes informations d'indication sont utilisées pour désactiver les une ou plusieurs ressources dans la première ressource ; et
la désactivation d'une ou plusieurs ressources dans la première ressource à partir des secondes informations d'indication, pour obtenir une troisième ressource désactivée.

6. Procédé de transmission de données, comprenant :
l'envoi (301, 402, 505), par un dispositif de réseau (10), d'un premier message à un dispositif terminal (20) ; et
la communication (303, 404, 507), par le dispositif de réseau (10), avec le dispositif terminal (20) à partir d'une seconde ressource activée, dans lequel la seconde ressource activée est obtenue par le dispositif terminal (20) dans un état de veille ou un état inactif en activant une ou plusieurs ressources dans une première ressource à partir du premier message, et la première ressource comprend une ressource de partie de bande passante, BWP, et/ou une ressource de planification semi-persistante, SPS ;
le procédé étant **caractérisé en ce que** le premier message comprend des premières informations d'indication comportant un champ, et les premières informations d'indication sont utilisées pour activer les une ou plusieurs ressources dans la première ressource, dans lequel le champ indique qu'une ou plusieurs ressources qui se trouvent dans la première ressource et qui correspondent à un identifiant de la seconde ressource activée sont dans l'état actif.

7. Procédé selon la revendication 6, dans lequel avant l'envoi (301, 402, 505) d'un premier message à un dispositif terminal (20), le procédé comprend également :
l'envoi (401) d'un premier message de libération au dispositif terminal (20), dans lequel le premier message de libération indique au dispositif terminal (20) de réserver la première ressource après être entré dans l'état de veille ou l'état inactif, ou le premier message de libération comprend des informations de configuration de la première ressource.

8. Procédé selon la revendication 6, dans lequel avant l'envoi (301, 402, 505) d'un premier message à un dispositif terminal (20), le procédé comprend également :
la réception d'un deuxième message envoyé par le dispositif terminal (20), dans lequel le deuxième message est utilisé pour initier un accès aléatoire à un dispositif de réseau (10), et le dispositif de réseau (10) est un dispositif de réseau (10) dans une cellule resélectionnée par le dispositif terminal ;
éventuellement, dans lequel le procédé comprend également :
la réception (502) d'un troisième message envoyé par le dispositif terminal (20), dans lequel le troisième message est utilisé pour demander la première ressource ; et
l'envoi (503) d'un quatrième message au dispositif terminal (20), dans lequel le quatrième message comprend les informations de configuration de la première ressource.

9. Procédé selon la revendication 8, dans lequel, après que le dispositif de réseau a établi une connexion de commande de ressources radio, RRC, avec le dispositif terminal, le procédé comprend également :
l'envoi (504) d'un second message de libération au dispositif terminal (20), dans lequel le second message de libération indique au dispositif terminal (20) de libérer la connexion RRC.

10. Procédé selon l'une quelconque des revendications 6 à 9, dans lequel le premier message comprend également des secondes informations d'indication, et les secondes informations d'indication sont utilisées pour désactiver les une ou plusieurs ressources dans la première ressource.

11. Dispositif terminal (20), dans lequel le dispositif terminal (20) est dans un état de veille ou un état inactif, et le dispositif terminal (20) comprend un module émetteur-récepteur (602) et un module de traitement (601) ;
le module émetteur-récepteur (602) est configuré pour recevoir un premier message envoyé par un dispositif de réseau (10) ;
le module de traitement (601) est configuré pour activer une ou plusieurs ressources dans une première ressource à partir du premier message, pour obtenir une seconde ressource activée, dans lequel la première ressource comprend une ressource de partie de bande passante, BWP, et/ou une ressource de planification semi-persistante, SPS ; et
le module émetteur-récepteur (602) est configuré pour communiquer avec le dispositif de réseau (10) à partir de la seconde ressource activée ;
le dispositif terminal (20) étant **caractérisé en ce que** :
le premier message comprend des premières informations d'indication comportant un champ, et les premières informations d'indication sont utilisées pour activer les une ou plusieurs ressources dans la première ressource, dans lequel le champ indique qu'une ou plusieurs ressources qui se trouvent dans la première ressource et qui correspondent à un identifiant de la seconde ressource activée sont dans l'état actif ; et
le module de traitement est également configuré pour activer les une ou plusieurs ressources dans la première ressource à partir des premières informations d'indication, pour obtenir la seconde ressource activée.

12. Dispositif terminal (20) selon la revendication 11, dans lequel le dispositif terminal (20) est également configuré pour mettre en œuvre le procédé selon l'une quelconque des revendications 2 à 5.

13. Dispositif de réseau (10), dans lequel le dispositif de réseau (10) comprend un module émetteur-récepteur (602) et un module de traitement (60)1 ;
le module émetteur-récepteur (602) est configuré pour envoyer un premier message à un dispositif terminal (20) ; et
le module de traitement (601) est configuré pour communiquer avec le dispositif terminal (20) à partir d'une seconde ressource activée, dans lequel la seconde ressource activée est obtenue par le dispositif terminal (20) dans un état de veille ou un état inactif en activant une ou plusieurs ressources dans une première ressource à partir du premier message, et la première ressource comprend une ressource de partie de bande passante, BWP, et/ou une ressource de planification semi-persistante, SPS ;
le dispositif de réseau (10) étant **caractérisé en ce que** le premier message comprend des premières informations d'indication comportant un champ, et les premières informations d'indication sont utilisées pour activer les une ou plusieurs ressources dans la première ressource, dans lequel le champ indique qu'une ou plusieurs ressources qui se trouvent dans la première ressource et qui correspondent à un identifiant de la seconde ressource activée sont dans l'état actif.

14. Dispositif de réseau (10) selon la revendication 13, dans lequel le dispositif de réseau (10) est également configuré pour mettre en œuvre le procédé selon l'une quelconque des revendications 7 à 10.

15. Support de stockage lisible par ordinateur, dans lequel le support de stockage lisible par ordinateur stocke un programme informatique, et lorsque le programme informatique est exécuté par des modules de traitement d'un dispositif terminal (20), le dispositif terminal (20) est capable de mettre en œuvre le procédé selon l'une quelconque des revendications 1 à 5, et lorsque le programme informatique est exécuté par un module de traitement d'un dispositif de réseau (10), le dispositif de réseau (10) est capable de mettre en œuvre le procédé selon l'une quelconque des revendications 6 à 10.
